# EUROPEAN PATENT APPLICATION

(11) **EP 2 509 382 A1**
(43) Date of publication of application: **10.10.2012**
(21) Application number: 11161714.8
(22) Date of filing: 08.04.2011
(51) Int. Cl.: H04W 72/12

(54) **Green relay scheduler**

(71) Applicant: Telefonaktiebolaget LM Ericsson (publ), 164 83 Stockholm (SE)
(72) Inventor: Wilhelmsson, Leif, 247 55 Dalby (SE); Johansson, Niklas, 191 34 Sollentuna (SE); Lindhoff, Bengt, 237 35 Bjärred (SE)
(74) Representative: Valea AB

(57) **Abstract**

The embodiments herein relate to a method in a relay node (110) for relaying data from a first network node (107) to a second network node (101) in a radio communication network (100). The relay node (110) receives the data from the first network node (107) and decodes the received data. The relay node (110) determines a delay constraint of the decoded data and recodes the decoded data. The relay node (110) relays the recoded data to the second network node (101) based on the determined delay constraint and according to a radio communication protocol. The communication between the relay node (110), the first network node (107) and the second network node (101) is based on the same radio communication protocol.

## Description

### TECHNICAL FIELD

Embodiments herein relate generally to a relay node and a method in the relay node. More particularly the embodiments herein relate to relaying data from a first network node to a second network node in a radio communication network.

### BACKGROUND

In a typical radio communications network, remote devices, also known as wireless terminals, mobile stations and/or User Equipment units (UE) communicate via Radio Access Networks (RAN) to a Core Network (CN). The remote devices may be mobile stations or user equipments such as mobile telephones also known as cellular telephones, and laptops with wireless capability, e.g., mobile termination, and thus may be, for example, portable, pocket, hand-held, computer-included, or car-mounted mobile devices which communicate voice and/or data with radio access network.

The radio access network covers a geographical area which is divided into cell areas, with each cell area being served by a base station, which in some radio access networks is also called evolved NodeB (eNB), NodeB, B node, Donor eNB (DeNB) or base station. A cell is a geographical area where radio coverage is provided by the radio base station at a base station site. Each cell is identified by an identity within the local radio area, which is broadcast in the cell. The base stations communicate over an air interface operating on radio frequencies with the remote devices within range of the base stations.

A relay node (RN) receives and transmits data between nodes in a communications network, for example between remote devices and base stations. By doing this, the relay may effectively extend the signal and service coverage of a base station and enhance the overall throughput performance of a radio communications network. A relay node is a node intended to give increased coverage without the need to install yet another base station. In the down-link (DL), i.e. from the base station to the remote device, the relay node receives the data from the base station, decode it and re-encode it, and then transmit the data to the remote device, or another remote device. In the uplink (UL), i.e. from the remote device to the base station, the corresponding procedure is done, but in the other direction instead. Although a relay node may have similar output powers as a base station, it is envisioned that there are many deployment where a significant lower output power suffice. Specifically, the needed output power may be expected to depend on the required cell size of the relay node.

Increased coverage might mean that basic coverage is obtained in locations that otherwise would not have been reached at all. However, it is more likely that increased coverage will imply that the supported data rate close to the relay node locations will be substantially increased. For instance, in an indoor location where the original radio communications network is built to support basic coverage, say a voice call that require some 10kbit/s, may, by the introduction of a relay node, allow for data rates in excess of 1 Mit/s, so an increase with a factor of 100 is not unrealistic.

Another benefit of using a relay node is that the remote devices connected to the relay node will typically use considerable less energy. This is due partly to that the devices typically may transmit data using much lower output power since the distance to the relay node is much smaller than to the base station, to which the relay node is connected. This is also due partly to that the same amount of data may be transmitted in shorter time, and by that less power is used for instance in the radio circuitry.

Towards remote devices such as the user equipments, the relay node appears as an ordinary base station, so the remote devices does not act differently than if the connection would have been to a base station instead of a relay node. This means that when the remote device scans for a cell, no distinction is made between a base station and a relay node. If the signal from the relay node has higher quality, the remote device tries to connect to the relay node, otherwise it connects to the base station.

In prior art solutions relay node is operating as base stations, which means time constraints, like low delay is more important than low power.

### SUMMARY

The objective of embodiments herein is therefore to obviate at least one of the above disadvantages and to provide improved power consumption in a communications network.

According to a first aspect, the objective is achieved by a method in a relay node for relaying data from a first network node to a second network node in a radio communication network. The first network node receives the data from the first network node and decodes the received data. The first network node determining a delay constraint of the decoded data and recodes the decoded data. Based on the determined delay constraint and according to a radio communication protocol, the first network node relays the recoded data to the second network node. The communication between the relay node, the first network node and the second network node is based on the same radio communication protocol.

According to a second aspect, the objective is achieved by a relay node for relaying data from a first network node to a second network node in a radio communication network. The relay node comprises a receiving unit which is configured to receive the data from the first network node and a decoding unit configured to decode the received data. The relay node further comprises a determining unit configured to determine a delay constraint of the decoded data and a recoding unit configured to recode the decoded data. A relaying unit, comprised in the relay node, is configured to relay the recoded data to the second network node based on the determined delay constraint and according to a radio communication protocol. The communication between the relay node, the first network node and the second network node is based on the same radio communication protocol.

Since the relay node considers the delay constraint of the data from the first network node, the data is relayed according to the delay constraint which improves the power consumption in a communications network. In many cases data to and from different devices are not time critical and therefore there is a need for method and apparatus for low power scheduling procedures in relay nodes.

Embodiments herein afford many advantages, of which a non-exhaustive list of examples follows:
With the embodiments herein, the relay node is kept in low power mode as long as possible, reducing the relay node power consumption. In addition, since short data packages transmitted between remote devices and base stations typically imply that the amount of overhead is relatively large, the totally generated amount of interference in the network is also reduced.
Another advantage of the embodiments herein is that by sending data from the base station via the relay node to the remote device, higher throughput is supported.
By using the same communication protocol, hardware and software functionality can be reused, which also reduces costs.
The embodiments herein are not limited to the features and advantages mentioned above. A person skilled in the art will recognize additional features and advantages upon reading the following detailed description.

### BRIEF DESCRIPTION OF THE DRAWINGS

The embodiments herein will now be further described in more detail in the following detailed description by reference to the appended drawings illustrating the embodiments and in which:
- Fig. 1: is a schematic block diagram illustrating embodiments of a radio communication network.
- Fig. 2: is a flowchart illustrating embodiments of a method in a radio communication network.
- Fig. 3: is a flowchart illustrating embodiments of a method in a radio communication network.
- Fig. 4a and b: are flowcharts illustrating embodiments of a method in a radio communication network.

- Fig. 5: is a schematic block diagram illustrating embodiments of a relay node.

The drawings are not necessarily to scale and the dimensions of certain features may have been exaggerated for the sake of clarity. Emphasis is instead placed upon illustrating the principle of the embodiments herein.

### DETAILED DESCRIPTION

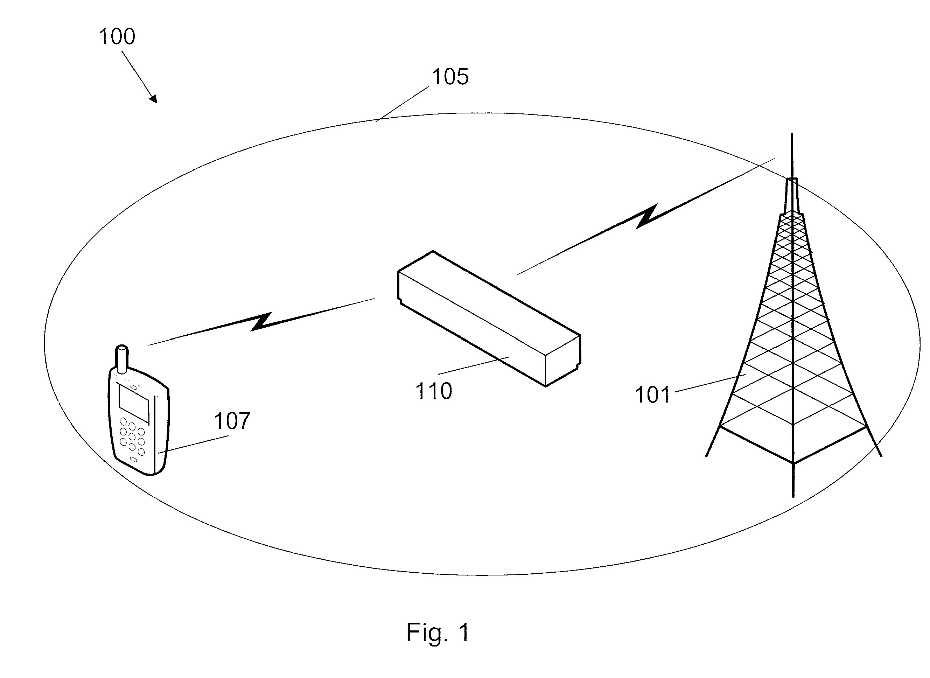

**Figure 1** depicts a **radio communications network 100**. The communications network 100 may use communication protocols such as Long Term Evolution (LTE), Worldwide Interoperability for Microwave Access (WiMAX), General Packet Radio Services (GPRS), Universal Mobile Telecommunications System (UMTS) etc. The wireless communications network 100 comprises a **base station 101** serving a **cell 105**. The base station 101 may be a base station such as a NodeB, an evolved NodeB (eNB), Donor eNB (DeNB), or any other network unit capable to communicate over a radio carrier with a **remote device 107** being present in the cell 105. Even though figure 1 only shows one remote device 107, a person skilled in the art will understand that a plurality of remote devices 107 may be present in the radio communications network 100 and in communication with the base station 101. A **relay node** (RN) **110** is a node located within the cell 105 which relays data between the base station 101 and remote devices 107. The radio communications network 100 uses the same radio communication protocol, e.g. LTE, for the communication from the remote device 107 to the relay node 110, as for communication from the relay node 110 to the base station 101. Using the same protocol means that hardware and software functionality can be reused, compared to the case with different radio protocols where basically different hardware units need to be used for respective protocol.

The remote device 107 may be any suitable communication device or computational device with communication capabilities, for instance but not limited to mobile phone, smart phone, personal digital assistant (PDA), laptop, MP3 player or portable DVD player (or similar media content devices), digital camera, or even stationary devices such as a PC. The remote device 107 may also be an embedded communication device in e.g. electronic photo frames, cardiac surveillance equipment, intrusion or other surveillance equipment, weather data monitoring systems, vehicle, car or transport communication equipment, etc.

The relay node 110 determines whether data is time critical or not. In case the data is not time critical, the data is stored in a buffer and the fed forward of data is halted until:
(a) other time critical data have been received, or
(b) a timer have timed out, or
(c) until sufficient amount of data is stored in the buffer, making it worthwhile, from a power consumption point of view to feed the data forward.

The relay node 110 is kept in low power mode, e.g. discontinuous reception and transmission (DRX/DTX), as much as possible, reducing the relay node power consumption. In addition, since short packages typically imply that the amount of overhead is relatively large, the totally generated amount of interference is also reduced.

In order to ease the description of the embodiments herein, the specific features are described in terms used for the relay nodes in 3GPP Release 10. This should by no means be considered as limiting.

A relay node 110 is used to increase the performance of a remote device 107 or other remote devices which is located at the cell-boundary of the base station 101. As mentioned above, the base station 101 may be referred to as Donor eNB (DeNB) as it is the donor to the relay node 110. By sending the data from the base station 101 via the relay node 110 to the remote device 107, higher throughput is supported.

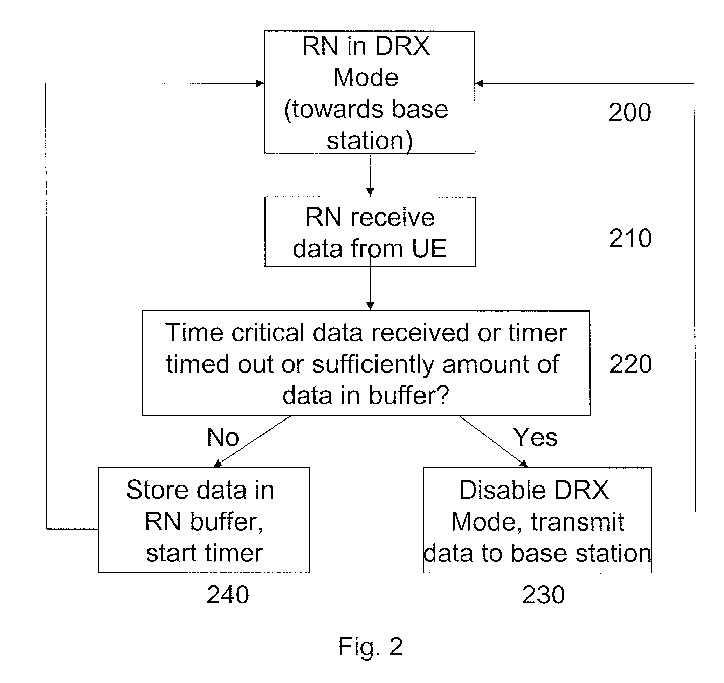

The method for relaying data from a first network node to a second network node in a radio communication network according to some embodiments will now be described with reference to the flowchart depicted in **Figure 2** relating to the uplink scheduling, i.e. towards the base station 101. The method comprises the following steps, which steps may as well be carried out in another suitable order than described below.

### Step 200

The relay node 110 is in some kind of low active mode with regards to a connection to the base station 101. The low active mode may imply for example a low power cycle where the relay node 110 on regular intervals read paging information from the base station 101, and in between paging occasions, i.e. in case of no data transaction, is in some kind of sleep mode.

### Step 210

A Random Access Channel (RACH) data packet is transmitted from the remote device 107 and the relay node 110 receives the RACH data packet from the remote device 107. The remote device 107 uses RACH to gain access to the base station 101 in order to establish its transmission. RACH is used here as an example. However, any other suitable access burst/access signal may also be applicable.

### Step 220

The relay node 110 decodes the packet and determines the delay constraint of the data packet, i.e. determines whether the data information comprised in the packet is time critical or not. The delay constraint may be labeled T.

### Step 230

If that the data was determined as time critical in step 220, i.e. "yes", a higher active mode is enabled between the relay node 110 and the base station 101, the relay node 110 transmits a RACH to the base station 101 and data is fed forward to the base station 101. The data which is fed forward is the same information bits as the data received in step 210. However, different coding/modulation may be used.

### Step 240

If the data is determined as not time critical in step 220, i.e. "no", the data is stored in a relay node buffer, and a timer related to the time criticalness of the data is initiated. For instance, the data might not be time critical with regards to milliseconds which requires immediate fed forward, but rather in the range of seconds, minutes or hours. Then the relay node 110 continues with the low active mode towards the base station 101. Other information could be transmitted from the same or other remote devices 107 to the relay node 110, and the procedure is repeated from step 200 - 240, i.e. wait to go to active mode relative to the base station 101 connection, until:
a) time critical data is received, or
b) the timer related to the time constraint T for any of the stored data is timed out, or
c) if the amount of data is sufficiently large, i.e. until it has reached a threshold, without any time constraints, to be worthwhile fed forward to the base station 101 from a power consumption point of view.

In some embodiments, the procedure is repeated until another timer related to a later received data packet received from the at least one remote device connected to the relay node 110 has timed out. The another timer may be the same timer as the timer in b) above, but it comes from another remote device 107. So the time set in the timer may differ from the timer in b). When the first timer from all remote devices 107 lapses, the relay node 110 will enter high power mode.

Then the relay node 110 transmits a RACH to the base station 101 and all stored data is fed forward to the base station 101, i.e. step 240, according to the communication protocol, for instance LTE, used between the relay node 110 and the base station 101.

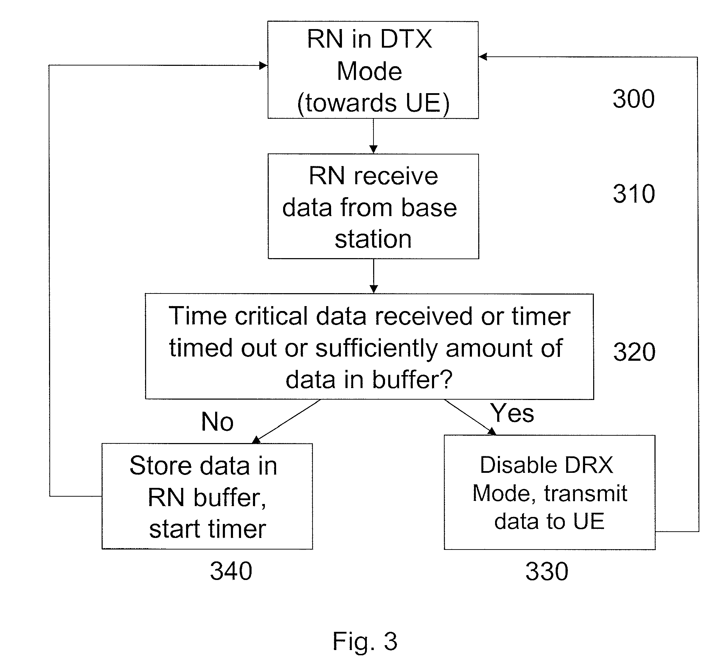

The method for relaying data from a first network node to a second network node in a radio communication network according to some embodiments will now be described with reference to the flowchart depicted in **Figure 3** relating to downlink scheduling, i.e. towards the remote device 107. The method comprises the following steps, which steps may as well be carried out in another suitable order than described below.

### Step 300

The relay node 110 is in some kind of low active mode with respect to the connection towards the remote device(s) 107. The low active mode may imply for example a DRX/DTX cycle where the relay node 110 on regular intervals read/transmit paging information from the base station 101/to the remote device(s) 107, and in between paging occasions, in case of no data transaction, is in some kind of sleep mode.

### Step 310

The relay node 110 is paged, and a connection setup procedure towards the base station 101 is enabled, and data is received form the base station 101. The data received at the relay node 110 is dedicated to at least one remote device 107.

### Step 320

The relay node 110 decodes the packet and determines whether the data information is time critical or not. The determination of the time criticalness comprises determination of a delay constraint, labeled T, for the decoded data packet.

### Step 330

If the data information is time critical, i.e. "yes", the low power mode of the relay node 110 is disabled, i.e. active mode is enabled between the relay node 110 and the remote devices 107. The relay node 110 pages the relevant remote devices 107, a connection setup procedure is enabled, and data is transferred to the remote device(s) 107.

### Step 340

If the data is determined as not time critical, the data is stored in a buffer and a timer related to the time criticalness of the data is enabled. For instance, the data might not be time critical with respect to milliseconds which requires immediate fed forward, but rather in the range of seconds, minutes or hours. Then the relay node 110 continues to be in the low active mode, i.e. step 300. Other information bits may be transmitted from base station 101 to the relay node 110, both to the same as well as to other remote devices 107. The same procedure is repeated, steps 310-320, i.e. the relay node 110 waits to go into active mode relative the remote device connection until:
a) time critical data is received, or
b) the timer related to the time constraint T for any of the stored data is timed out, or
c) if the amount of data is sufficiently large, i.e. until it has reached a threshold, without any time constraints, to be worthwhile fed forward to the remote devices 107 from a power consumption point of view.

In some embodiments, the above procedure is repeated until another timer related to a later received data packet received from the base station 101 connected to the relay node 110 has timed out. The another timer may be the same timer as the timer in b) above, but it comes from another remote device 107. So the time set in the timer may differ from the timer in b). When the first timer from all remote devices 107 lapses, the relay node 110 will enter high power mode.

Then the relay node 110 pages the relevant at least one remote device 107 and data is transferred to the remote devices 107 according to the communication protocol used between the relay node 110 and the remote devices 107.

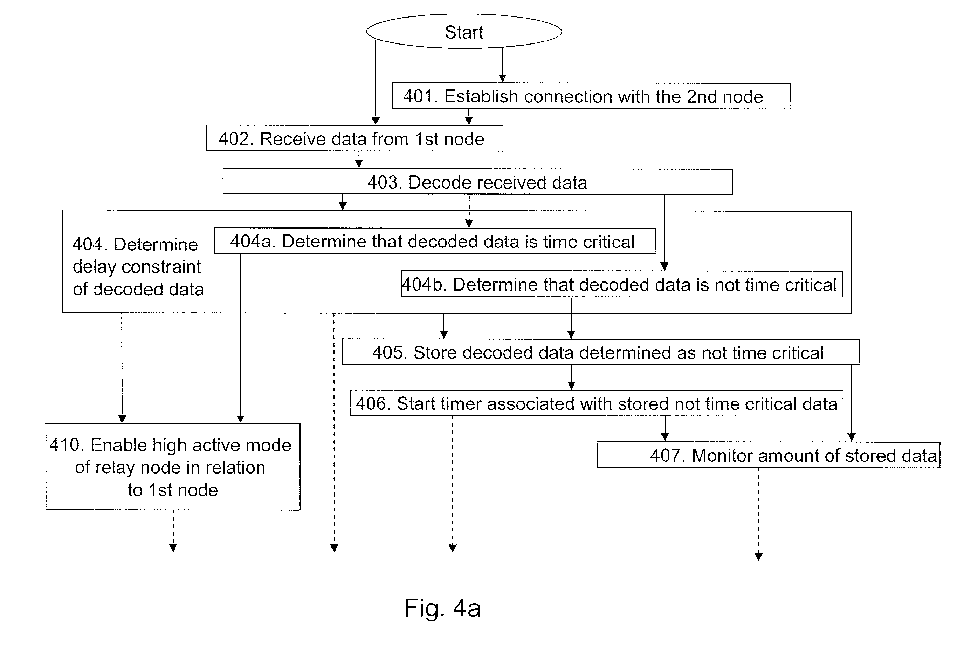

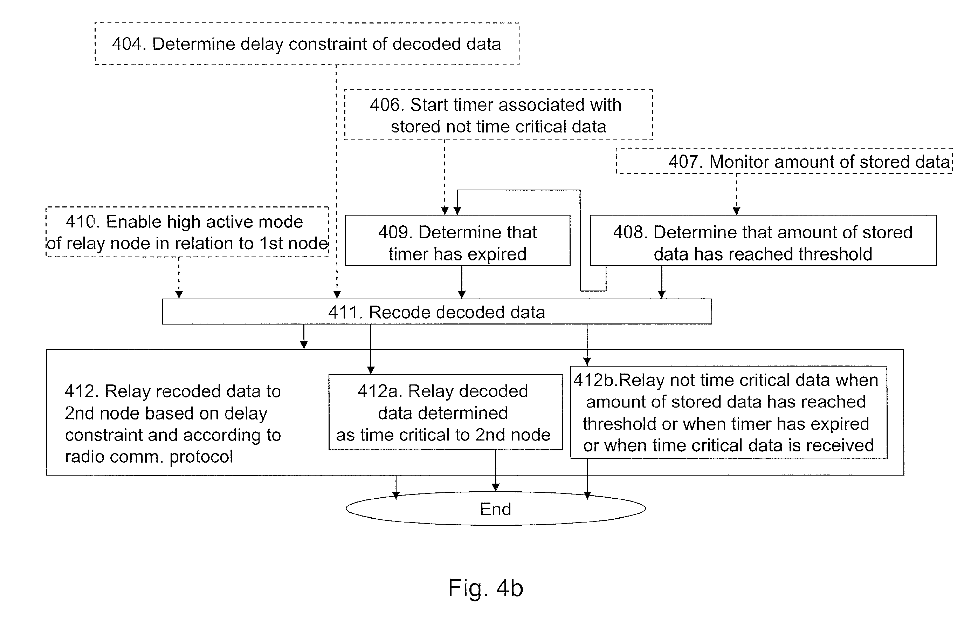

The method described above will now be described seen from the perspective of the relay node 110. In some embodiments, the relay node 110 is in low active mode in relation to the first network node 107. In some embodiments, the first network node 107 is a remote device and the second network node 101 is a base station, or the first network node 107 is a base station and the second network node 101 is a remote device. **Figures 4a** **and** **4b** are flowcharts describing the present method in the relay node 110, for relaying data from a first network node 107 to a second network node 101 in a radio communication network 100. The method comprises the steps to be performed by the relay node 110:

### Step 401

In some embodiments, the relay node 110 establishes a connection with the second network node 101.

### Step 402

The relay node 110 receives the data from the first network node 107.

### Step 403

The relay node 110 decodes the received data.

### Step 404

The relay node 110 determines a delay constraint of the decoded data.

### Step 404a

This is a sub step of step 404.

In some embodiments, the relay node 110 determines that the decoded data is time critical.

In some embodiments, the time criticalness of the data is indicated by a parameter.

### Step 404b

This is a sub step of step 404, and a step to be performed as an alternative to step 404a.

In some embodiments, the relay node 110 determines that the decoded data is not time critical.

### Step 405

In some embodiments, the relay node 110 stores the decoded data determined as not time critical.

### Step 406

In some embodiments, the relay node 110 starts a timer associated with stored not time critical data.

### Step 407

In some embodiments, the relay node 110 monitors an amount of the stored data;

### Step 408

In some embodiments, the relay node 110 determines that the amount of stored data has reached a threshold.

### Step 409

In some embodiments, the relay node 110 determines that the timer has expired.

### Step 410

In some embodiments, the relay node 110 enables high active mode of the relay node 110 in relation to the first network node 107 when the decoded data is determined as time critical.

### Step 411

The relay node 110 recodes the decoded data.

### Step 412

The relay node 110 relays the recoded data to the second network node 101 based on the determined delay constraint and according to a radio communication protocol. The communication between the relay node 110, the first network node 107 and the second network node 101 is based on the same radio communication protocol.

### Step 412a

This is a sub step of step 412.

In some embodiments, the relay node 110 relays the decoded data determined as time critical to the second network node 101.

### Step 412b

This is a sub step of step 412.

In some embodiments, the relay node 110 relays the not time critical data when the amount of stored data has reached the threshold or when the timer has expired or when time critical data is received.

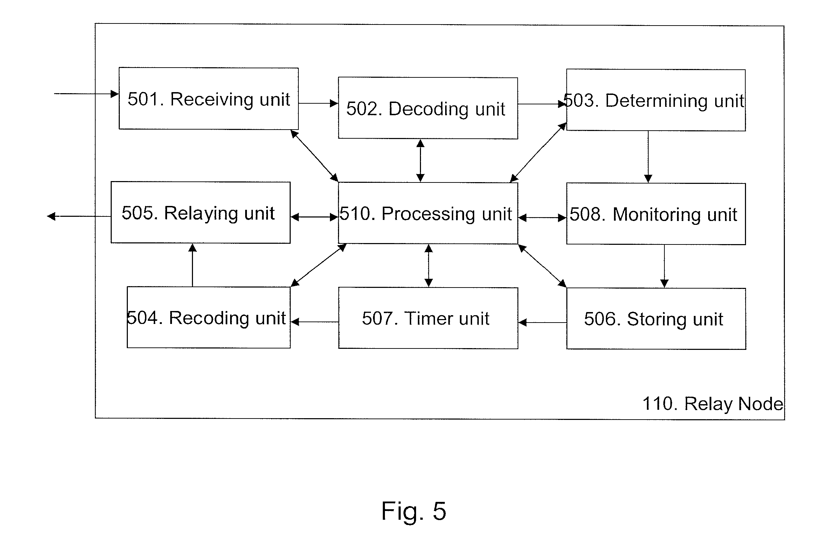

To perform the method steps shown in figure 4 for relaying data from a first network node 107 to a second network node 101 in a radio communication network 100 the relay node 110 comprises an arrangement as shown in **Figure 5**. In some embodiments, the relay node 110 is in low active mode in relation to the first network node 107. In some embodiments, the first network node 107 is a remote device and the second network node 101 is a base station, or the first network node 107 is a base station and the second network node 101 is a remote device.

The relay node 110 comprises a **receiving unit 501** configured to receive the data from the first network node 107.

Further, the relay node 110 comprises a **decoding unit 502** configured to decode the received data, and a **determining unit 503** configured to determine a delay constraint of the decoded data. In some embodiments, the determining unit 503 is further configured to determine that the decoded data is time critical or to determine that the decoded data is not time critical. In some embodiments, the determining unit 503 is further configured to determine that the amount of stored data has reached a threshold, and/or to determine that the timer has expired. In some embodiments, the time criticalness of the data is indicated by a parameter.

The relay node 110 comprises a **recoding unit 504** configured to recode the decoded data.

The relay node 110 comprises a **relaying unit 505** configured to relay the recoded data to the second network node 105 based on the determined delay constraint and according to a radio communication protocol. The communication between the relay node 110, the first network node 107 and the second network node 101 is based on the same radio communication protocol. In some embodiments, the relaying unit 505 is further configured to relay the decoded data determined as time critical to the second network node 101. In some embodiments, the relaying unit 505 is further configured to relay the not time critical data when the amount of stored data has reached the threshold or when the timer has expired or when time critical data is received.

In some embodiments, the relay node 110 comprises a **storing unit 506** configured to store the decoded data determined as not time critical, and a **timer unit 507** configured to start a timer associated with stored not time critical data.

In some embodiments, the relay node 110 comprises a **monitoring unit 508** configured to monitor an amount of the stored data.

In some embodiments, the relay node 110 comprises a **processing unit 510** configured to establish a connection with the second network node 101. In some embodiments, the processing unit 501 is further configured to enable high active mode of the relay node 110 in relation to the first network node 107 when the decoded data is determined as time critical.

The present mechanism for relaying data from a first network node 107 to a second network node 101 in a radio communication network 100 may be implemented through one or more processors, such as the processing unit 510 in the relay node arrangement depicted in Figure 5 together with computer program code for performing the functions of the embodiments herein. The processor may be for example a Digital Signal Processor (DSP), Application Specific Integrated Circuit (ASIC) processor, Field-programmable gate array (FPGA) processor or micro processor. The program code mentioned above may also be provided as a computer program product, for instance in the form of a data carrier carrying computer program code for performing the embodiments herein when being loaded into the relay node 110. One such carrier may be in the form of a CD ROM disc. It is however feasible with other data carriers such as a memory stick. The computer program code may furthermore be provided as pure program code on a server and downloaded to the relay node 110 remotely.

The embodiments herein are not limited to the above described preferred embodiments. Various alternatives, modifications and equivalents may be used. Therefore, the above embodiments should not be taken as limiting the scope of the embodiments, which is defined by the appending claims.

It should be emphasized that the term "comprises/comprising" when used in this specification is taken to specify the presence of stated features, integers, steps or components, but does not preclude the presence or addition of one or more other features, integers, steps, components or groups thereof. It should also be noted that the words "a" or "an" preceding an element do not exclude the presence of a plurality of such elements.

It should also be emphasized that the steps of the methods defined in the appended claims may, without departing from the embodiments herein, be performed in another order than the order in which they appear in the claims.

## Claims

1. A method in a relay node (110) for relaying data from a first network node (107) to a second network node (101) in a radio communication network (100), the method comprising:
*receiving* (402) the data from the first network node (107);
*decoding* (403) the received data;
*determining* (404) a delay constraint of the decoded data;
*recoding* (411) the decoded data; and
*relaying* (412) the recoded data to the second network node (101) based on the determined delay constraint and according to a radio communication protocol, and wherein the communication between the relay node (110), the first network node (107) and the second network node (101) is based on the same radio communication protocol.

2. The method according to claim 1, wherein the determining of the delay constraint of the decoded data further comprises:
*determining* (404a) that the decoded data is time critical; or
*determining* (404b) that the decoded data is not time critical.

3. The method according to claim 2, wherein the relaying the recoded data to the second network node (101) based on the determined delay constraint and according to a radio communication protocol further comprises:
*relaying* (412a) the decoded data determined as time critical to the second network node (101).

4. The method according to claim 2, further comprising
*storing* (405) the decoded data determined as not time critical; and
*starting* (406) a timer associated with stored not time critical data.

5. The method according to claim 4, further comprising:
*monitoring* (407) an amount of the stored data;
*determining* (408) that the amount of stored data has reached a threshold; and/or
*determining* (409) that the timer has expired;
wherein the relaying the recoded data to the second network node (101) based on the determined delay constraint and according to a radio communication protocol further comprises:
*relaying* (412b) the not time critical data when the amount of stored data has reached the threshold or when the timer has expired or when time critical data is received.

6. The method according to any of the claim 1 - 5, further comprising:
*establishing* (401) a connection with the second network node (101).

7. The method according to any of the claims 1 - 6, wherein the relay node (110) is in low active mode in relation to the first network node (107).

8. The method according to any of the claim 1 - 7, further comprising
*enabling* (410) high active mode of the relay node (110) in relation to the first network node (107) when the decoded data is determined as time critical.

9. The method according to any of the claims 1 - 8, wherein the time criticalness of the data is indicated by a parameter.

10. The method according to any of the claims 1 - 9, wherein the first network node (107) is a remote device and the second network node (101) is a base station, or wherein the first network node (107) is a base station and the second network node (101) is a remote device.

11. A relay node (110) for relaying data from a first network node (107) to a second network node (101) in a radio communication network (100), the relay node (110) comprising:
*a receiving unit* (501) configured to receive the data from the first network node (107);
*a decoding unit* (502) configured to decode the received data;
*a determining unit* (503) configured to determine a delay constraint of the decoded data;
*a recoding unit* (504) configured to recode the decoded data; and
*a relaying unit* (505) configured to relay the recoded data to the second network node (101) based on the determined delay constraint and according to a radio communication protocol, and
wherein the communication between the relay node (110), the first network node (107) and the second network node (101) is based on the same radio communication protocol.

12. The relay node (110) according to claim 11, wherein the determining unit (503) is further configured to
determine that the decoded data is time critical; or
determine that the decoded data is not time critical.

13. The relay node (101) according to claim 12, wherein the relaying unit (505) is further configured to relay the decoded data determined as time critical to the second network node (101).

14. The relay node (110) according to claim 12, further comprising
*a storing unit* (506) configured to store the decoded data determined as not time critical; and
*a timer unit* (507) configured to start a timer associated with stored not time critical data.

15. The relay node (110) according to claim 14, further comprising:
*a monitoring unit* (508) configured to monitor an amount of the stored data;
and wherein the determining unit (503) is further configured to determine that the amount of stored data has reached a threshold; and/or to determine that the timer has expired; and wherein the relaying unit (505) is further configured to relay the not time critical data when the amount of stored data has reached the threshold or when the timer has expired or when time critical data is received.
